# EUROPEAN PATENT SPECIFICATION

(11) **EP 1 470 368 B1**
(45) Date of publication and mention of the grant of the patent: **18.07.2007**
(21) Application number: 02712271.2
(22) Date of filing: 29.01.2002
(51) Int. Cl.: F23N 1/00, G05D 16/20

(54) **A VALVE UNIT FOR MODULATING THE DELIVERY PRESSURE OF A GAS**
EINE VENTILEINHEIT FÜR MODULATION VON AUSLASSDRUCK EINES GASSES
ENSEMBLE SOUPAPE POUR MODULER LA PRESSION DE REFOULEMENT D'UN GAZ

(43) Date of publication of application: 27.10.2004
(73) Proprietor: Sit la Precisa S.p.a., 35129 Padova (IT)
(72) Inventor: RIMONDO, Filiberto, I-35020 Saonara (IT); DORIGO, Roberto, I-30021 Caorle (IT)
(74) Representative: Cantaluppi, Stefano
(86) International application number: PCT/IT2002/000044
(87) International publication number: WO 2003/064928

(56) References cited:
- EP-A- 1 058 060
- WO-A-00/79164
- US-A- 4 567 394
- US-A- 5 076 314
- US-B1- 6 302 495

## Description

The present invention relates to a valve unit for modulating the delivery pressure of a gas according to the preamble to main Claim 1. Such a valve is known, from document EP-A-1 058 060.

### Technological background

Valve units of the type indicated are used widely for controlling the delivery of a fuel gas to a burner or other similar user, particularly but not exclusively in heating apparatus.

In these units, it is known to regulate the delivery pressure (and consequently the flow-rate) of the gas in controlled manner by modulation between a minimum pressure and a maximum pressure performed by a servo-valve which is subservient to a modulation unit with a diaphragm. The servo-valve typically comprises a closure element which can be opened by a diaphragm that is sensitive to the pressure differential existing between the pressure in the delivery duct and a control pressure. This control pressure is controlled by the operation of a modulation valve.

A valve unit having the above-mentioned characteristics is known from the Applicant's European application EP 1058060. In this application, the actuator of the modulation valve is controlled by an oscillating control signal (for example, an electrical voltage signal) with a predetermined "duty cycle" in order consequently to generate an oscillating control-pressure signal the integrated mean value of which is a function of the preselected "duty cycle". A limitation which may be encountered in the above-mentioned valve unit lies in the fact that the control-pressure value which is sensitive to the modulation is represented by a mean value of the pressure reached within a certain period of time, so that, by its very nature, the gas delivery-pressure regulation function is rendered less accurate.

Moreover, the control of the modulation valve is quite complex since it requires a control circuit which is arranged to control the regulation of the "duty cycle" during the valve-modulation operation.

### Description of the invention

The object of the present invention is to provide a valve unit which ensures improved and more accurate modulation control of the gas-delivery pressure, achieved by a modulation valve and a respective actuator for the operation thereof with a simplified structure but at the same time such as to overcome the limitations discussed with reference to the prior art mentioned.

This object and others which will become clearer from the following description are achieved by the invention by means of a valve unit formed in accordance with the appended claims.

### Brief description of the drawings

Further characteristics and advantages of the invention will become clearer from the following detailed description of a preferred embodiment thereof, described by way of non-limiting example, with reference to the appended drawings, in which:
- Figure 1 is a schematic longitudinal section through a valve unit formed in accordance with the invention,
- Figure 2 is a view corresponding to that of Figure 1, of a variant of the invention,
- Figure 3 is a schematic block diagram of a second variant of the valve unit according to the invention,
- Figure 4 is a view corresponding to that of Figure 3, of a further variant of the invention,
- Figure 5 is a section through a detail of the valve unit of the preceding drawings,
- Figure 6 is a graph of a characteristic pressure-voltage curve of the valve unit according to the embodiment of Figure 3,
- Figure 7 is a graph of a characteristic pressure-voltage curve of the valve unit according to the embodiment of Figure 4.

### Preferred embodiment of the invention

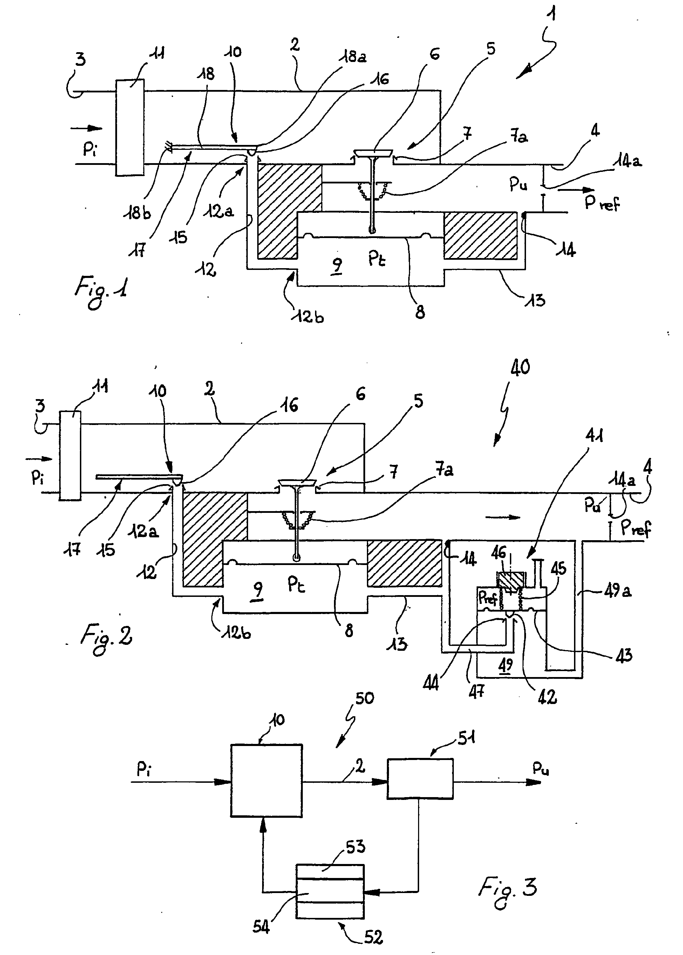

With reference initially to Figure 1, a valve unit according to the present invention for modulating the delivery pressure of a fuel gas delivered to a burner or other similar user, not shown in the drawing, is generally indicated 1. The fuel gas is supplied in the unit 1 through a main duct 2 between an inlet opening 3 and an outlet opening 4.

The valve unit 1 also comprises a servo-valve 5 mounted in the main duct 2 and including a closure element 6 which is urged resiliently into closure on a valve seat 7 by the resilient load of a spring 7a and can be opened by a diaphragm 8 which is sensitive to the pressure differential existing between the pressure Pu at the outlet 4, on one side, and to the pressure Pt in a control chamber 9, on the other side. The control-pressure value Pt is controlled by the operation of a pressure-regulation device, generally indicated 10 and described in detail below.

The unit 1 also has a safety valve 11 disposed in the duct 2, upstream of the pressure regulator 10 and controlled, for example, by an electromagnetic unit (not shown) of conventional structure for shutting off the gas-flow in the duct 2 in the absence of a power supply to the electromagnetic unit controlling the safety valve.

The control chamber 9 is in flow communication with the main duct 2 through a duct 12 for tapping off gas, with opposed ends 12a, 12b. At the end 12a, the duct 12 opens into the main duct 2, upstream of the servo-valve 5.

The control chamber 9 also communicates with the outlet opening 4 of the duct 2 through a transfer duct 13 having a constriction 14 in the region of the opening 4. Moreover, a delivery nozzle disposed at the outlet 4 of the unit, downstream of the constriction 14, is indicated 14a.

The regulator 10 comprises a valve seat 15 formed in the tapping duct 12, preferably in the region of the end 12a, and a corresponding closure element 16 which is moved so as to close/open the seat 15 by an actuator means, generally indicated 17. The actuator 17 is of the piezoelectric type, for example, of the type comprising a double metal plate 18 extending along a predominant longitudinal axis between opposed ends 18a, 18b.

The piezoelectric actuator is connected, at its end 18a, to the body of the closure element 16 and carries, at its opposite end 18b, a pair of terminals 19 for the electrical supply of the actuator.

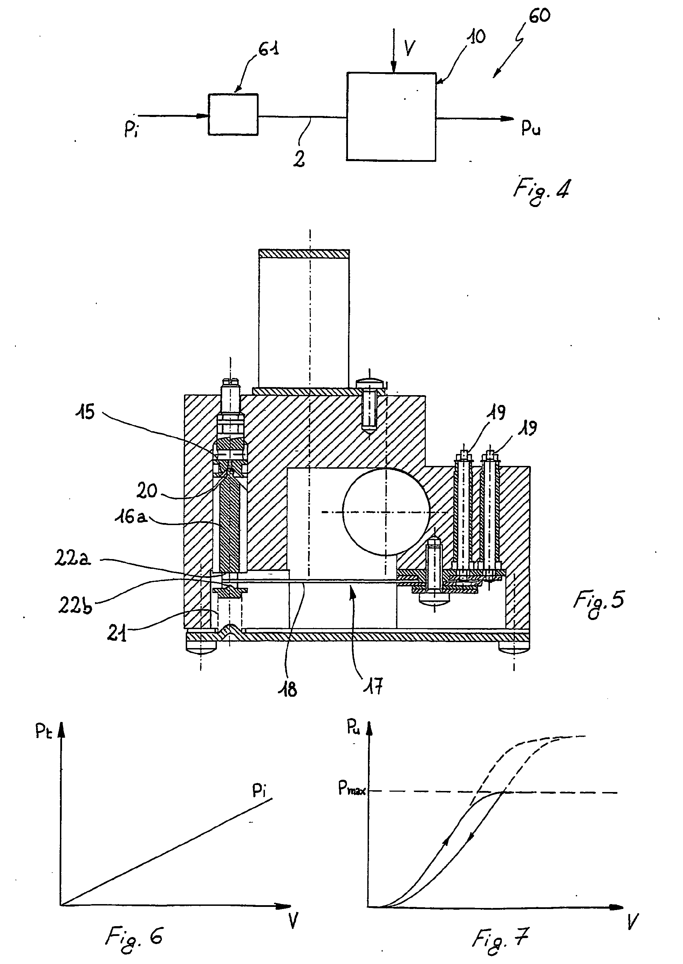

With particular reference to Figure 5, the closure element 16 has a rod 16a carrying, at one end, a head 20 of the closure element with a curved surface, preferably in the form of a spherical cap, acting on the valve seat 15. At the opposite end, the rod is acted on by a spring 21 for urging the closure element 16 resiliently into closure on the valve seat 15 in opposition to the opening action of the piezoelectric actuator.

The end 18a of the actuator acts between a pair of opposed abutment surfaces 22a, 22b defined by an opening formed in the rod 16a. The distance between the opposed abutments is selected in a manner such that the end 18a of the element 18 remains spaced from the abutment surface 22b in the absence of an electrical supply to the piezoelectric actuator so as to permit safety closure of the valve seat 15 under the effect of the resilient action of the spring 21 alone in this condition.

The element 18 of the piezoelectric actuator is selected in a manner such that the displacement brought about in the closure element 16 relative to the valve seat 15 is correlated proportionally with the control signal sent to the actuator, for example, an electrical voltage signal. By virtue of the correlation between the lifting movement of the closure element 16 and the control pressure Pt produced in the chamber 9, for a preselected value of the above-mentioned control signal, a corresponding value of the control pressure Pt is unequivocally generated so that the delivery pressure Pu is consequently modulated in a correlated manner.

The graph of Figure 6 shows a characteristic curve of the control pressure Pt as a function of the supply voltage V of the piezoelectric actuator for a predetermined input pressure Pi in the main duct 2. For example, an almost linear regulation curve Pt-V (and consequently Pu-V) can advantageously be obtained, in which the pressure modulation takes place regularly and precisely for each preselected value of the delivery pressure required.

Figure 2 shows a first variant of the invention, generally indicated 40, in which details similar to those of the previous embodiment are indicated by the same reference numerals. This variant differs from the valve unit 1 mainly in that a maximum delivery-pressure regulator, generally indicated 41 in Figure 2, is provided downstream of the servo-valve 5. The regulator 41 comprises a closure element 42 controlled by a diaphragm 43 and urged resiliently into closure on a valve seat 44 by the resilient load of a spring 45. The resilient load is adjustable by screwing of a spring holder 46. The valve seat 44 is formed at the end of a duct 47 which is in communication, at its opposite end, with the transfer valve 13. The valve seat in turn is in communication, downstream of the closure element 42, with a chamber 49 communicating with the outlet duct 4 through a duct 49a. The duct 49a opens into the outlet duct 4 downstream of the constriction 14. Moreover, the closure element 42 can be operated, so as to open the respective seat 44 by the diaphragm 43 which is sensitive; on the one hand to the pressure Pu (acting in the chamber 49) and, on the other hand, to the resilient force of the spring 45, less a reference pressure Pref (acting on the diaphragm 43 from the side remote from the chamber 49), for example, equal to atmospheric pressure. The reference pressure Pref may, for example, be selected so as to be equal to the pressure existing downstream of the nozzle 14a. Upon the assumption that the pressure exerted by the spring 45 can be expressed as the ratio between the resilient force of the spring 45 (equivalent pressure) and an equivalent area of the diaphragm 43, when the output pressure Pu exceeds the equivalent pressure value, the closure element 42 is moved so as to open the seat 44, consequently increasing the cross-section for the gas-flow, thus limiting the maximum value of the output pressure Pu to the equivalent pressure value. For values of the pressure Pu below the equivalent pressure value, the delivery pressure is modulated by the regulator device 10, as described above, up to the maximum pressure value which can be reached, which can be set by regulation of the resilient load on the spring holder 46.

In this case, a characteristic curve of the type shown in Figure 7 is representative of the behaviour of the delivery pressure as a function of the voltage control signal V supplied to the piezoelectric actuator. It will be noted that the maximum delivery pressure is limited to the value (Pmax) set which is adjustable by means of the maximum adjustment screw 46 of Figure 2. It is thus possible to achieve a precise adjustment of the maximum output-pressure value.

Figure 3 shows, by means of a block diagram, a variant of the invention, generally indicated 50, in which details similar to those of the previous embodiment are indicated by the same reference numerals. This variant differs from the above-described valve unit 1 mainly in that a feedback system is provided in the modulation control of the delivery pressure.

For this purpose, the valve unit 50 is provided with a pressure (or flow-rate) detector with a sensor 51 disposed in the duct 2 downstream of the servo-valve 5, in the region of the outlet opening 4. The unit also comprises a feedback control circuit, indicated 52, which is arranged to receive, as an input, a signal correlated with the pressure value detected by the sensor 51. The unit also includes comparison means 53 for comparing the value measured with a preset value relating to a preselected pressure (or flow-rate) as well as means 54 for generating a control signal in dependence on the differential detected and sending it to the piezoelectric actuator so as to regulate the movement of the closure element 16 in order to achieve the desired delivery-pressure value Pu.

It is pointed out that, with the feedback system of the above-mentioned variant, the delivery pressure value Pu which can be achieved is substantially independent of the pressure Pi of the gas supply to the valve unit.

In this case, a characteristic curve of the type shown in Figure 7 is representative of the behaviour of the pressure Pt as a function of the control signal V, irrespective of any fluctuations or variations of the input pressure Pi.

Figure 4 shows, in a block diagram, a further variant of the invention, generally indicated 60, in which details similar to those of the previous embodiments are indicated by the same reference numerals.

The unit 60 differs from the previous variant in that no feedback system is provided but it has a further valve, indicated 61, for regulating the maximum delivery pressure. The valve is disposed upstream of the pressure regulator 10 and is of conventional structure, for example, it is formed with a valve seat and a respective closure element acted on by a diaphragm which is subject to an adjustable resilient load. Adjustment of the resilient load, for example, by screwing of a spring-holder, enables a maximum threshold value to be set for the delivery pressure Pu which can be reached with modulation of the valve unit.

A regulation curve representative of the unit 60 may be, for example, that shown in Figure 7, including the portions shown by broken lines.

The invention thus achieves the objects proposed, affording the above-mentioned advantages over known solutions.

The main advantage lies in the fact that the valve unit according to the invention ensures improved and more accurate modulation control of the gas-delivery pressure which, moreover, is achieved with a simplified structure of the valve unit in comparison with known solutions.

## Claims

1. A valve unit for modulating the delivery pressure of a gas, comprising:
- a main duct (2) for the delivery of a gas-flow between an inlet opening (3) and an outlet opening (4),
- a servo-valve (5) mounted in the duct (2) and having a first closure element (6) controlled by a diaphragm (8), the diaphragm being subjected to the gas-delivery pressure (Pu) on one side and, on the other side, to a control pressure (Pt) established in a corresponding control chamber (9) of the servo-valve (5),
- a tapping duct (12) for tapping off the gas delivered to the inlet of the unit, communicating at its two opposite ends with the main duct (2), upstream of the servo-valve (5), and with the control chamber (9), respectively,
- a pressure-regulation device (10) associated with the servo-valve (5) and including a valve seat (15) mounted in the tapping duct (12) and a respective second closure element (16) associated with the seat,
- a piezoelectric actuator, associated with the second closure element (16) for the operative control thereof, and a control circuit for generating a control signal for the actuator **characterized in that**
- the second closure element (16) is arranged to open and close said tapping duct,
- the control circuit provides a variable amplitude control signal for the actuator,
- the movement of the second closure element (16) relative to the corresponding valve seat (15) is correlated proportionally with the variable amplitude actuator-control signal so that, for a preselected signal value, a corresponding control-pressure value (Pt) is generated so as to modulate the delivery pressure (Pu) in a proportionally correlated manner,

2. A valve unit according to Claim 1 in which the piezoelectric actuator (17) comprises a double-plate element (1.8) an operative end (18a) of which is connected to the second closure element (16).

3. A valve unit according to Claim 1 or Claim 2 in which the control signal is a voltage-supply signal for the piezoelectric actuator (17).

4. A valve unit according to any one of the preceding claims, comprising a feedback circuit (52) acting on the pressure regulator, said feedback circuit including means (51) for detecting the delivery pressure downstream of the servo-valve and comparison means (57) for comparing the detected delivery-pressure value with a preselected value and consequently generating a corresponding control signal for the piezoelectric actuator (17) so as to modulate the delivery pressure in order to achieve the preselected pressure value.

5. A valve unit according to Claim 4 in which the detector means (51) are arranged to detect the flow-rate of gas delivered.

6. A valve unit according to one or more of the preceding claims, comprising a further valve (61) for regulating the maximum delivery pressure, disposed upstream of the servo-valve (5) and of the pressure-regulator device (10).

## Patentansprüche

1. Ventileinheit zur Modulation des Auslassdruckes eines Gases, mit:
- einem Hauptkanal (2) zur Förderung einer Gasmenge zwischen einer Eintrittsöffnung (3) und einer Austrittsöffnung (4),
- einem Servoventil (5), das in dem Kanal (2) montiert ist, und ein erstes Verschlusselement (6) besitzt, das von einer Membran (8) gesteuert wird, wobei die Membran einerseits dem Gasauslassdruck (Pu) und andererseits einem Steuerdruck (Pt) ausgesetzt ist, der in einer entsprechenden Steuerkammer (9) des Servoventils (5) entsteht,
- einem Anzapfkanal (12) zum Anzapfen des Gases, das zu dem Eintritt der Ventileinheit gefördert wird, die an ihren beiden gegenüberliegenden Enden mit dem Hauptkanal (2) vor dem Servoventil (5) bzw. mit der Steuerkammer (9) in Verbindung steht,
- einer Druckregeleinrichtung (10), die mit dem Servoventil (5) verbunden ist, und einen Ventilsitz (15) aufweist, der in dem Anzapfkanal (12) montiert ist, sowie einem jeweiligen zweiten verschlusselement (16), das mit dem Sitz verbunden ist,
- einem piezoelektrischen Stellantrieb, der mit dem zweiten Verschlusselement (16) verbunden ist, und mit dem es bedient wird, sowie einem Steuerschaltkreis zur Erzeugung eines Steuersignals für den Stellantrieb, **dadurch gekennzeichnet, dass**
- das zweite Verschlusselement (16) so angeordnet ist, dass es den Anzapfkanal öffnet und schließt,
- der Steuerkreis ein Steuersignal mit variabler Amplitude für den Stellantrieb bereitstellt,
- die Bewegung des zweiten Verschlusselementes (16) in Bezug auf den entsprechenden Ventilsitz (15) proportional mit dem Steuersignal mit variabler Amplitude für den Stellantrieb korreliert, so dass für einen vorher ausgewählten Signalwert ein entsprechender Steuerdruck-Wert (Pt) erzeugt wird, um den Auslassdruck (Pu) in proportionaler Korrelation zu modulieren,

2. Ventileinheit nach Anspruch 1, wobei der piezoelektrische Stellantrieb (17) ein doppeltes Plattenelement (18) aufweist, dessen betriebsbereites Ende (18a) mit dem zweiten Verschlusselement (16) verbunden ist.

3. Ventileinheit nach Anspruch 1 oder Anspruch 2, wobei es sich bei dem Steuersignal um ein Spannungssignal für den piezoelektrischen Stellantrieb (17) handelt.

4. Ventileinheit nach einem der vorhergehenden Ansprüche mit einem Rückkopplungskreis (52), der auf den Druckregler wirkt, wobei der Rückkopplungskreis Einrichtungen (51) zur Feststellung des Auslassdruckes nach dem Servoventil und.Vergleichseinrichtungen (57) zum Vergleich des festgestellten Wertes des Auslassdruckes mit einem vorausgewählten Wert besitzt, und demzufolge ein entsprechendes Steuersignal für den piezoelektrischen Stellantrieb (17) erzeugt wird, um den Auslassdruck zu modulieren, damit der voreingestellte Druckwert erreicht wird.

5. Ventileinheit nach Anspruch 4, wobei die Detektoreinrichtung (51) so angeordnet ist, dass die Durchflussleistung des geförderten Gases festgestellt wird.

6. Ventileinheit nach einem oder mehreren der vorhergehenden Ansprüche mit einem weiteren Ventil (61) zur Regelung des maximalen Auslassdruckes, das vor dem Servoventil (5) und der Druckregeleinrichtung (10) angeordnet ist.

## Revendications

1. Unité de soupape pour moduler la pression de refoulement d'un gaz, comprenant :
un conduit principal (2) pour le refoulement d'un écoulement de gaz entre une ouverture d'entrée (3) et une ouverture de sortie (4),
une servo-vanne (5) montée dans le conduit (2) et ayant un premier élément de fermeture (6) contrôlé par un diaphragme (8), le diaphragme étant soumis à une pression de refoulement de gaz (Pu) d'un côté et de l'autre côté à une pression de régulation (Pt) établi dans une chambre de régulation correspondante (9) de la servo-vanne (5),
un conduit de soutirage (12) pour soutirer le gaz refoulé à l'entrée de l'unité, communiquant au niveau de ses deux extrémités opposées avec le conduit principal (2), en amont de la servo-vanne (5), et avec la chambre de régulation (9), respectivement,
un dispositif de régulation de pression (10) associé à la servo-vanne (5) et comprenant un siège de soupape (15) monté dans le conduit de soutirage (12) et un second élément de fermeture (16) respectif associé au siège,
un actionneur piézo-électrique associé au second élément de fermeture (16) pour sa commande opérationnelle, et un circuit de commande pour générer un signal de commande pour l'actionneur, **caractérisé en ce que** :
le second élément de fermeture (16) est agencé pour ouvrir et fermer ledit conduit de soutirage,
le circuit de commande fournit un signal- de commande à amplitude variable pour l'actionneur,
le mouvement du second élément de fermeture (1.6) par rapport au siège de soupape (15) correspondant correspond de manière proportionnelle au signal de commande d'actionneur à amplitude variable de sorte que, pour une valeur de signal présélectionnée, une valeur de pression de commande (Pt) correspondante est générée afin de moduler la pression de refoulement (Pu) d'une manière proportionnellement corrélée.

2. Unité de soupape selon la revendication 1, dans laquelle l'actionneur piézo-électrique (17) comprend un élément à double plaque (18) dont une extrémité opérationnelle (18a) est raccordée au second élément de fermeture (16).

3. Unité de soupape selon la revendication 1 ou la revendication 2, dans laquelle le signal de commande est un signal d'alimentation de tension pour l'actionneur piézo-électrique (17).

4. Unité de soupape selon l'une quelconque des revendications précédentes, comprenant un circuit de rétroaction (52) agissant sur le régulateur de pression, ledit circuit de rétroaction comprenant des moyens (51) pour détecter la pression de refoulement en aval de la servo-vanne et des moyens de comparaison (57) pour comparer la valeur de pression de refoulement détectée avec une valeur présélectionnée et générant par conséquent un signal de commande correspondant pour l'actionneur piézo-électrique (17) afin de moduler la pression de refoulement afin d'obtenir la valeur de pression présélectionnée.

5. Unité de soupape selon la revendication 4, dans laquelle les moyens de détecteur (51) sont agencés pour détecter le débit du gaz refoulé.

6. Unité de soupape selon une ou plusieurs des revendications précédentes, comprenant une autre soupape (61) pour réguler 1a pression de refoulement maximum, disposée en amont de la servo-vanne (5) et du dispositif de régulateur de pression (10).
